Europäisches Patentamt

European Patent Office

Office européen des brevets

(19)

(11) Numéro de publication : **0 192 008**
**B1**

(12)

# FASCICULE DE BREVET EUROPÉEN

(45) Date de publication du fascicule du brevet :
**24.01.90**

(21) Numéro de dépôt : **85402598.8**

(22) Date de dépôt : **23.12.85**

(51) Int. Cl.⁵ : **G 01 N 27/12, G 21 C 17/02**

(54) Détecteur de vapeurs d'un métal alcalin.

(30) Priorité : **07.01.85 FR 8500127**

(43) Date de publication de la demande :
**27.08.86 Bulletin 86/35**

(45) Mention de la délivrance du brevet :
**24.01.90 Bulletin 90/04**

(84) Etats contractants désignés :
**AT BE CH DE FR GB IT LI LU NL**

(56) Documents cités :
**FR–A– 2 202 596**
**FR–A– 2 316 597**
**US–A– 3 950 980**

(73) Titulaire : **CENTRE NATIONAL D'ETUDES SPATIALES**
**2, Place Maurice Quentin**
**F-75001 Paris (FR)**

(72) Inventeur : **Launay, Jean-Claude**
**77 Rue d'Ennery**
**F-33200 Bordeaux Cauderan (FR)**
Inventeur : **Portier, Josik**
**Rue Gazaillan**
**F-33170 Gradignan (FR)**
Inventeur : **Tanguy, Bernard**
**3 Square du Gué**
**F-33170 Gradignan (FR)**
Inventeur : **Menil, Francis**
**Saint Selve**
**F-33650 La Brede (FR)**

(74) Mandataire : **de Boisse, Louis Arnaud et al**
**CABINET de BOISSE 37, Avenue Franklin D. Roosevelt**
**F-75008 Paris (FR)**

EP 0 192 008 B1

**Description**

L'invention concerne un détecteur de vapeurs d'un métal alcalin, en particulier de sodium.

Dans de nombreuses techniques modernes, dans l'industrie ou au laboratoire, on est amené à employer des métaux alcalins fondus, notamment comme fluides caloporteurs.

L'exemple d'utilisation du sodium dans les surgénérateurs nucléaires est bien connu. Un autre exemple concerne des caloducs au sodium fondu utilisés dans des fours industriels ou de laboratoire nécessitant des zones rigoureusement isothermes. Cette utilisation concerne notamment la préparation de matériaux de hautes performances, tels que les semiconducteurs monocristallins par exemple.

Dans les utilisations citées ci-dessus les métaux alcalins fondus sont placés dans des enceintes métalliques portées à des températures pouvant dépasser 1 000 °C, les pressions de vapeurs atteignent alors des pressions de plusieurs bars. Ces enceintes sont également soumises à des cycles thermiques. Ces conditions techniquement sévères font apparaître des contraintes qui peuvent entraîner des dommages au caloduc, (fêlures, vieillissement des soudures). Des fuites peuvent alors apparaître pouvant entraîner des feux d'alcalins particulièrement difficiles à maîtriser. Ces feux constituent un danger pour le personnel. Un contrôle très rigoureux de la pression partielle d'alcalins doit donc être effectué afin de prévenir de tels accidents.

On connaît déjà, par FR-A-2 202 596, un appareil de contrôle de la tension de vapeur de sodium basé sur l'emploi d'un système électrolytique, notamment d'un système électrolytique à électrolyte solide (par exemple le sodium β-alumine). Cet appareil est d'une structure relativement complexe du fait des composants électriques requis.

On connaît aussi, par US-A-3 950 980 un détecteur de vapeur, par exemple, de mercure basé sur l'emploi d'un élément détecteur, qui peut être, entre autres, en or.

La présente invention se propose de fournir un détecteur de vapeurs de métal alcalin, notamment de sodium, capable de remplir cette mission, et ceci d'une façon particulièrement simple.

L'invention est basée sur la propriété qu'a un fil d'or ou une couche d'or ou d'antimoine de réagir rapidement avec les vapeurs d'un métal alcalin, notamment de sodium, avec variation importante de sa conductivité électrique. Cette variation de conductivité électrique peut être utilisée pour générer un signal commandant la coupure de l'alimentation électrique du four et l'actionnement d'une alarme.

Plus précisément l'invention concerne un détecteur de vapeurs de métal alcalin, caractérisé en ce qu'il comprend un capteur comprenant un élément conducteur de l'électricité en or ou en antimoine, relié à ses extrémités à deux conducteurs électriques, des moyens, reliés auxdits conducteurs, de détection d'une variation importante de la résistance électrique de l'élément conducteur en or ou en antimoine, ou d'une autre grandeur électrique dépendante de ladite résistance électrique, résultant de la réaction de l'or ou de l'antimoine avec des vapeurs d'un métal alcalin, et un dispositif de sécurité commandé par lesdits moyens de détection.

L'élément conducteur de l'électricité peut être un fil d'or ou une couche d'or ou d'antimoine déposée sur un support approprié.

L'invention s'applique principalement à la détection de vapeurs de sodium mais pourrait être utilisée aussi pour la détection de vapeurs de potassium ou autre métal alcalin. On décrira ci-après l'invention plus particulièrement eu égard à la détection de vapeurs de sodium.

Comme indiqué plus haut, l'invention est basée sur le fait qu'un élément en or ou en antimoine réagit rapidement avec des vapeurs de sodium avec variation importante de sa conductivité électrique.

Cette propriété a été démontrée dans une expérience au cours de laquelle on a chauffé simultanément, dans un four, du sodium et un capteur selon l'invention et on a enregistré, sur un graphique, les variations de la résistance électrique R du capteur et de la température T en fonction du temps t. Dans le cas d'une couche mince d'or, on a noté un brusque accroissement par un facteur 2 de la résistance de la couche d'or vers 230 °C, puis un retour de la résistance presqu'à sa valeur initiale, et enfin un deuxième accroissement de la résistance par un facteur 5 vers 260 °C sans retour à la valeur initiale. Chaque accroissement de résistance se produit rapidement et atteint son maximum en l'espace de 90 secondes environ.

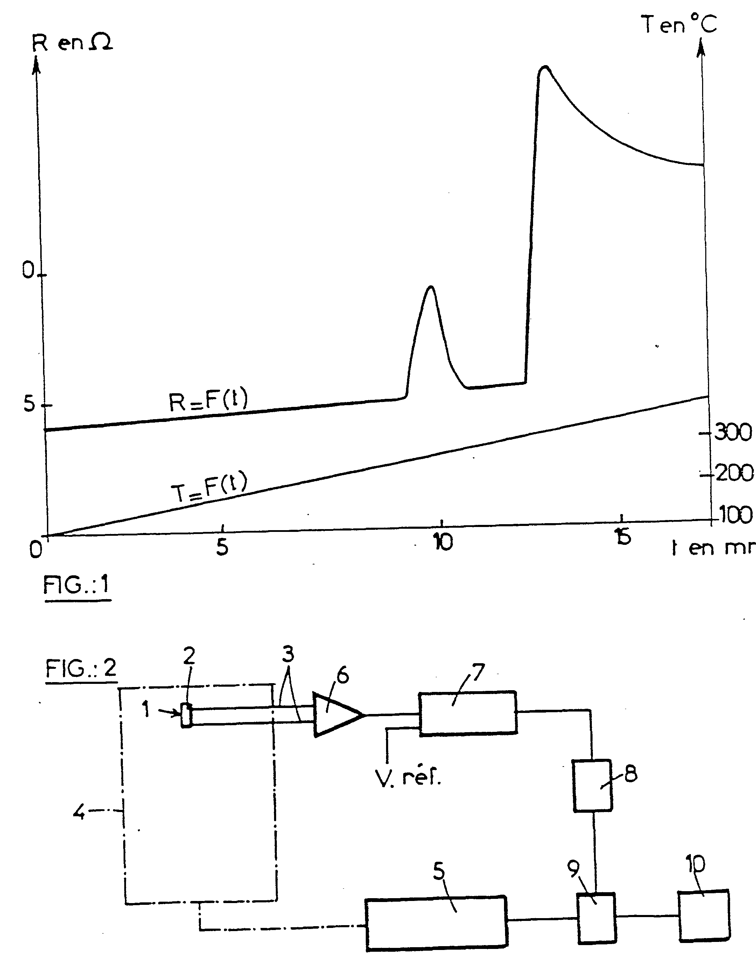

Les résultats de cette expérience sont représentés graphiquement sur la figure 1 annexée.

Dans le cas d'une couche mince d'or, l'accroissement de la résistance de la couche se produit vers 230 °C, température à laquelle la pression partielle du sodium $P_{Na}$ est de l'ordre de 0,13 Pa ($10^{-3}$ mm de Hg).

Un détecteur selon l'invention à base d'or permet donc de détecter une pression partielle de sodium de 0,13 Pa et plus en l'espace de quelques dizaines de secondes.

Dans le cas d'une couche mince d'antimoine, on a noté un brusque accroissement par un facteur d'environ 50 de la résistance de la couche d'antimoine vers 360 °C, puis une diminution, sans retour à la valeur initiale.

L'accroissement se produit rapidement et atteint son maximum en l'espace de 30 secondes environ. A la température de 360 °C, la pression partielle de sodium $P_{Na}$ est de l'ordre de 42 Pa ($3 \times 10^{-1}$ mmHg).

Un détecteur selon l'invention à base d'antimoine permet donc de détecter une pression partielle de sodium de 42 Pa à 360 °C environ en l'espace de quelques dizaines de secondes.

Comme indiqué ci-dessus, l'élément-conducteur du capteur peut être un fil d'or, par exemple de quelques dizaines de micromètres de diamètre, ou bien une couche d'or ou d'antimoine déposée sur un support isolant approprié, par exemple de l'alumine. La couche d'or ou d'antimoine peut être réalisée par des techniques dites en couche épaisse ou en couche mince.

Des éléments conducteurs en couche épaisse peuvent être fabriqués par impression sérigraphique d'une composition à base d'or sur un support convenable, par exemple en alumine, séchage et cuisson à haute température destinée à opérer un frittage. Des compositions à base d'or utiles pour former des motifs conducteurs sont bien connues dans le domaine des circuits imprimés et disponibles dans le commerce en provenance de divers fabricants (en particulier la Société E.I. du Pont de Nemours and Company). Ces compositions comprennent, en général, de la poudre d'or, une fritte de verre et un diluant convenable. Des compositions similaires à base d'antimoine peuvent être réalisées sans difficulté. Les couches ainsi produites ont des épaisseurs dans la gamme de 5 à 50 micromètres.

Des éléments en couche mince peuvent être obtenus par pulvérisation cathodique. Il est bien connu que, lorsqu'une forte différence de potentiel est établie entre deux électrodes plongées dans un milieu ionisable (gaz raréfié), il se produit une projection de matière en provenance de la cathode. Pour la préparation d'un capteur en couche mince, on peut utiliser une pulvérisation cathodique par radiofréquence. Dans un tel procédé, une différence de potentiel alternative est appliquée entre les électrodes. Les ions provenant du gaz ne peuvent pas suivre les variations trop rapides du champ électrique. Il se crée une auto-polarisation négative permanente de la cathode qui permet la capture des cations du gaz et leur éjection ainsi que l'éjection de matière vers l'anode. Les couches ainsi produites ont des épaisseurs dans la gamme de 0,01 à 1 micromètre.

Une valeur de la résistance de la couche adaptée aux appareils de mesure peut être obtenue par sablage de la couche.

Il est à noter que par le terme « or », on désigne aussi bien l'or pur que les alliages contenant une proportion majeure d'or. Il en est de même pour l'antimoine.

Selon la nature de l'élément conducteur, le capteur sera apte à fonctionner dans des gammes de températures différentes. Ainsi les couches d'or obtenues par la technique dite en couche épaisse, sont généralement stables dans l'intervalle de 20 à 700 °C environ, étant habituellement recuites vers 850 °C. Les couches d'or obtenues par pulvérisation cathodique présentent un phénomène de recristallisation à 550 °C qui perturbe leur conductivité électrique. On les utilisera donc pour des applications dans lesquelles elles seront exposées à des températures moindres.

Les fils d'or seront, par contre, utiles pour les applications mettant en jeu des températures très élevées (au-dessus de 700 °C).

Quant aux couches d'antimoine, elles conviendront pour l'utilisation dans une gamme de températures allant de 250 à 500 °C.

Afin d'illustrer davantage la présente invention on va décrire maintenant un mode de réalisation d'un détecteur selon l'invention, en se référant à la figure 2 qui est un schéma de principe de ce détecteur.

Le détecteur représenté sur la figure 2, comprend un capteur 1 constitué d'une mince couche d'or 2 de 0,1 μm d'épaisseur déposée sur support d'alumine et de deux conducteurs 3, par exemple en cuivre serrés sur les petits côtés opposés de la couche 2 qui présente une forme rectangulaire (10 mm × 1 mm). Ce capteur peut être disposé, par exemple, dans un four électrique 4 à caloducs de sodium alimenté en énergie électrique par une source 5. Les conducteurs 3 et la couche 2 sont parcourus par un courant de faible intensité I constante. La résistance de la couche 2 étant égale à R (environ 3 ohms initialement), la tension V aux bornes de la couche 2 est égale au produit RI. Après amplification dans l'amplificateur 6, la tension V est comparée dans le comparateur 7 à une tension de référence Vref. Si V est égal à Vref ou est peu différent de celle-ci aucun signal ne sort du comparateur 7.

Si par contre, la couche d'or 2 réagit avec des vapeurs de sodium, sa résistance 5 augmente fortement et la tension aux bornes de la couche 2 va augmenter aussi fortement, typiquement d'un facteur 2, en l'espace de quelques dizaines de secondes. Le comparateur 7 va alors émettre un signal qui après mise en forme en 8 va activer le dispositif de sécurité 9. Ce dernier va mettre hors circuit la source 5 d'énergie électrique et déclencher l'alarme 10, qui peut être, par exemple, sonore et/ou visuel. Si désiré, le dispositif 9 pourrait aussi commander la mise en marche d'un extincteur spécifique des feux de métaux alcalins.

Il va de soi que les modes de réalisation décrits ne sont que des exemples et qu'on pourrait les modifier, notamment par substitution d'équivalents techniques, sans pour cela sortir du cadre de l'invention.

## Revendications

1. Un détecteur de vapeurs de métal alcalin, ayant un capteur (1) comprenant un élément conducteur (2) de l'électricité en or ou en antimoine relié à ses extrémités à deux conducteurs électriques (3), des moyens (6, 7), reliés auxdits conducteurs, de détection d'une variation importante de la résistance électrique de l'élément conducteur en or ou en antimoine, ou d'une autre grandeur électrique dépendante de ladite résistance électrique, résultant de la réaction de l'or ou de l'antimoine avec des vapeurs d'un métal alcalin, et un dispositif de sécurité (9) commandé par lesdits moyens de détection.

2. Un détecteur selon la revendication 1, caractérisé en ce que l'élément conducteur est un fil d'or ou d'un alliage contenant une proportion majeure d'or.

3. Un détecteur selon la revendication 1, caractérisé en ce que l'élément conducteur est une couche d'or ou d'un alliage contenant une proportion majeure d'or déposée sur un support isolant.

4. Un détecteur selon la revendication 1, caractérisé en ce que l'élément conducteur est une couche d'antimoine ou d'un alliage contenant une proportion majeure d'antimoine déposée sur un support isolant.

5. Un détecteur selon l'une quelconque des revendications 1 à 4, caractérisé en ce que les moyens de détection comprennent un amplificateur (6) et un comparateur de tension (7).

6. Un détecteur selon l'une quelconque des revendications 1 à 5, caractérisé en ce que le dispositif de sécurité commande au moins l'une des actions suivantes :
a) la coupure d'une alimentation électrique (5),
b) la mise en marche d'une alarme (10), et
c) le déclenchement d'un extincteur spécifique des feux de métaux alcalins.

7. Un détecteur selon l'une quelconque des revendications 1 à 6, caractérisé en ce qu'il est un détecteur de vapeurs de sodium.

## Claims

1. A detector for alkali metal vapours, having a sensor (1) comprising an element (2) which conducts electricity and which is made of gold or of antimony and which is connected, at its ends, to two electrical conductors (3), means (6, 7), connected to the said conductors, for detecting a large variation in the electrical resistance of the conductive element made of gold or of antimony, or in another electrical quantity dependent upon the said electrical resistance, resulting from the reaction of the gold or antimony with vapours of an alkali metal, and a safety device (9) commanded by the said detecting means.

2. A detector according to Claim 1, characterized in that the conductive element is a wire of gold or of an alloy containing a major proportion of gold.

3. A detector according to Claim 1, characterized in that the conductive element is a layer of gold or of an alloy containing a major proportion of gold, deposited on an insulating support.

4. A detector according to Claim 1, characterized in that the conductive element is a layer of antimony or an alloy containing a major proportion of antimony, deposited on an insulating support.

5. A detector according to any one of Claims 1 to 4, characterized in that the detecting means comprise an amplifier (6) and a voltage comparator (7).

6. A detector according to any one of Claims 1 to 5, characterized in that the safety device commands at least one of the following actions :
a) the interruption of an electrical power supply (5)
b) the activation of an alarm (10)
c) the triggering of a specific extinguisher for alkali metal fires.

7. A detector according to any one of Claims 1 to 6, characterized in that it is a detector for sodium vapours.

## Patentansprüche

1. Detektor für Alkalimetalldämpfe, mit einem Fühler (1), der ein elektrisches Leiterelement (2) aus Gold oder Antimon aufweist, das an seinen Enden mit zwei elektrischen Leitern (3) verbunden ist, mit Mitteln (6, 7), die mit den genannten Leitern verbunden sind, zum Auffinden einer wichtigen Veränderung des elektrischen Widerstandes des elektrischen Leiters aus Gold oder Antimon, oder einer anderen, von dem genannten elektrischen Widerstand abhängigen Größe, woraus sich eine Reaktion des Goldes oder des Antimons mit Alkalimetalldämpfen ergibt, sowie mit einer Sicherheitsvorrichtung (9), die von den genannten Detektormitteln gesteuert wird.

2. Detektor nach Anspruch 1, dadurch gekennzeichnet, daß das Leiterelement ein Draht aus Gold oder einer einen größeren Anteil an Gold enthaltenden Legierung ist.

3. Detektor nach Anspruch 1, dadurch gekennzeichnet, daß das Leiterelement eine Beschichtung aus Gold oder einer einen größeren Anteil an Gold enthaltenden Legierung auf einem isolierenden Träger ist.

4. Detektor nach Anspruch 1, dadurch gekennzeichnet, daß das Leiterelement eine Beschichtung aus Antimon oder einer einen größeren Anteil an Antimon enthaltenden Legierung auf einem isolierenden Träger ist.

5. Detektor nach einem der Ansprüche 1 bis 4, dadurch gekennzeichnet, daß die Detektormittel einen Verstärker (6) und einen Spannungsvergleicher (7) aufweisen.

6. Detektor nach einem der Ansprüche 1 bis 5, dadurch gekennzeichnet, daß die Sicherheitsvorrichtung mindestens eine der folgenden Vorgänge steuert :
a. Ein Abschalten der elektrischen Versorgung (5),
b. ein Inbetriebsetzen einer Alarmvorrichtung (10) und
c. ein Auslösen einer speziellen Löschvorrichtung für Alkalimetallfeuer.

7. Detektor nach einem der Ansprüche 1 bis 6, dadurch gekennzeichnet, daß er ein Detektor für Natriumdämpfe ist.

FIG.:1

FIG.:2